# EUROPEAN PATENT SPECIFICATION

(11) **EP 4 429 982 B1**
(45) Date of publication and mention of the grant of the patent: **24.12.2025**
(21) Application number: 22802729.8
(22) Date of filing: 07.11.2022
(51) Int. Cl.: B65G 57/30, B65G 47/08

(54) **CASES GROUPING AND TRANSFER UNIT FOR CASE PACKER MACHINES**
BEHÄLTERGRUPPIERUNGS- UND ÜBERTRAGUNGSEINHEIT FÜR BEHÄLTERPACKERMASCHINEN
UNITÉ DE REGROUPEMENT ET DE TRANSFERT DE BOÎTIERS POUR MACHINES DE GARNITURE D'ÉTANCHÉITÉ DE BOÎTIER

(30) Priority: 09.11.2021 IT 202100028439
(43) Date of publication of application: 18.09.2024
(73) Proprietor: Siempharma S.r.l., 04011 Aprilia (LT) (IT)
(72) Inventor: CACCIOTTI, Sisto, 04011 Aprilia (LT) (IT); MARZIOLI, Diego, 04011 Aprilia (LT) (IT)
(74) Representative: Brunacci, Marco
(86) International application number: PCT/IB2022/060686
(87) International publication number: WO 2023/084376

(56) References cited:
- WO-A1-2021/107788
- DE-U1- 29 816 135
- ES-A1- 2 554 838

## Description

### Technical Field

The present invention relates to a case grouping and transfer unit for case packer machines.

### Background Art

The present invention finds a preferred application thereof in the field of the so-called "case packer" machines, i.e., machines wherein cases are packed inside cardboard boxes. It cannot, however, be ruled out that the case grouping and transfer unit can also be installed inside packaging machines intended to pack cases inside different types of packages.

The term "case" generally refers to a container used to contain products in general, preferably medicines, e.g. packaged inside blister packs. **In** the remainder of this description and in the subsequent claims, the term "case" may also refer to a stand-alone product, and thus not placed inside a box, or additional types of packaging such as, e.g., boxes, flasks, and/or similar containers.

As is well known, a grouping and transfer unit receives an incoming sequence of cases, e.g., from a conveyor line, to transfer them grouped together towards an output area and overlapping them in several layers to form groups to be placed inside cardboard boxes ready for labeling and subsequent shipment.

Such cardboard boxes are obtainable, e.g., from tubular die-cuts that from an initial flattened configuration are set to volume to receive the cases and then closed once the cases have been introduced inside.

Case grouping and transfer units of known type are generally provided with a two-sided, short-length entry tunnel to receive several units of cases in a row, usually about a dozen. Once a row has occupied the entire available length in the tunnel, the cases are lifted together by means of a lifting device and parked temporarily in an upper shelf to allow additional cases to enter the tunnel.

The shelf is made by means of retractable barriers (in jargon, "traps") with a dual function: to allow the cases to move freely by height between the sidewalls and, once overhead, to operate as a support for the cases coming from below.

It should also be specified that whenever a row of cases is lifted upwards it moves the row parked in the shelf thus effectively making a grouping of cases arranged in neat rows one above the other. When the maximum height of the sidewalls is reached, the cases all stacked together are moved to an output area where they are delivered to the wrapping unit that will finish the packaging operations. An example of this kind of apparatus is described in the patent document WO2021/107788A1. The described apparatus is configured to execute a series of steps comprising: receiving an open carton containing items, closing the lid panels, lifting the carton above the lidding station, applying a label to the carton. The known apparatus is configured to repeat all the steps for each subsequent carton in such a way that each carton pushes on the base of the carton above so that all the cartons in the stack are pushed upwards with the bottom carton.

Usually, the case packer machines pack huge quantities of batches of cases with different heights. For this purpose, the position of the traps is set at a maximum height roughly equal to the height of the highest cases that can be handled by the case packer machine. In this way, it is possible to receive in the tunnel various types of case to be packed with different heights. In the event, however, of the cases being much lower in height than the predefined height of the traps, the stroke of the cases during lifting is exaggerated resulting in unnecessarily extended lifting times.

The ratio between the grouping speed and the height of the cases is disproportionate, thus compromising the overall performance of the whole case packer machine.

### Description of the Invention

The Applicant realized that, by modifying the height of the traps, the transfer of the cases can greatly speed up.

The Applicant thus thought of introducing automations which allow the height of the traps to be varied in order to group and transfer different types of cases, adapting the grouping operations to the size of the cases in each batch.

By virtue of the above requirements, the present invention, therefore, relates to a case grouping and transfer unit which allows the position of the traps to be adjusted whenever desired in order to speed up the grouping of cases and their subsequent transfer to subsequent stations.

Another object of the present invention is to devise a case grouping and transfer unit which can overcome the aforementioned drawbacks of the prior art within the framework of a simple, rational, easy and efficient to use as well as cost-effective solution.

The aforementioned objects are achieved by this case grouping and transfer unit having the characteristics of claim 1. Advantageous embodiments of the invention are laid down in the depednent claims.

### Brief Description of the Drawings

Other characteristics and advantages of the present invention will become more apparent from the description of a preferred, but not exclusive, embodiment of a case grouping and transfer unit, illustrated by way of an indicative, yet nonlimiting example, in the attached tables of drawings in which:
- Figure 1 is a perspective view of part of a case packer machine provided with a case grouping and transfer unit in accordance with the present invention,
- Figures 2, 3 and 4 are cross-sectional views of the case grouping and transfer unit in Figure 1,
- Figure 5 is a detailed view of the movement assembly of the case grouping and transfer unit in Figure 1.

### Embodiments of the Invention

With particular reference to these figures, reference numeral 1 globally denotes a case grouping and transfer unit for case packer machines 100 for transferring cases from an input area I to an output area O.

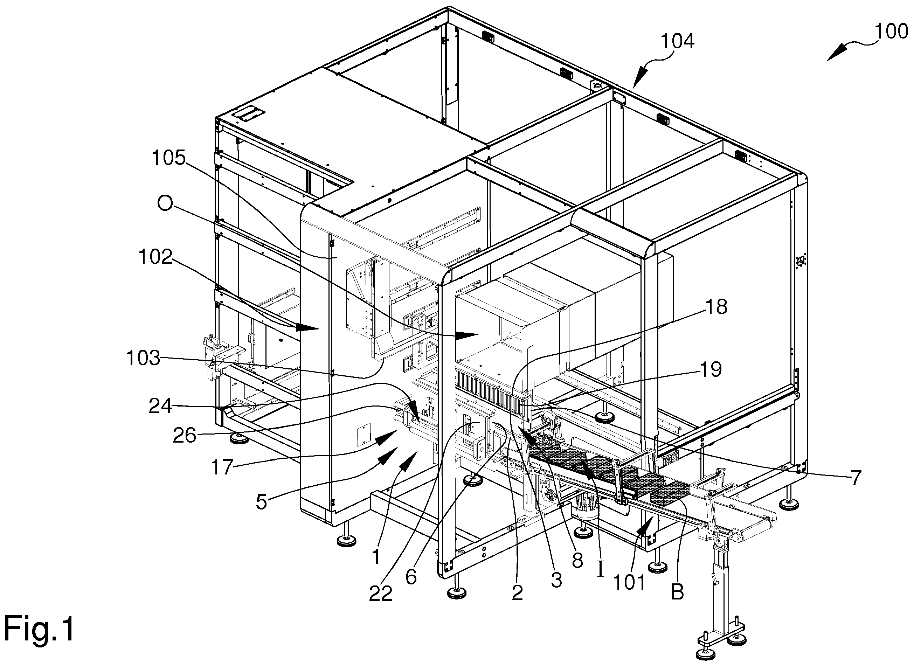

Figure 1 shows part of a case packer machine 100 configured to pack cases inside, preferably, cardboard boxes. It cannot, however, be ruled out that the case packer machine 100 may be configured to pack cases inside different types of packages.

Preferably, the cases to be packed have a substantially parallelepiped shape. It cannot, however, be ruled out that the case packer machine 100 be configured to pack cases having different conformations.

Appropriately, the case packer machine 100 is configured to pack cases having different heights from each other.

The grouping and transfer unit 1 according to the present invention is mounted within the case packer machine 100 in order to group a plurality of cases together and transfer them to, e.g., a wrapping/packaging unit 102. In the present case, the grouping and transfer unit 1 is configured to receive at least a first layer S1 and a second layer S2 of cases to arrange them on top of each other, stacking them together.

The term "layer of cases" is intended to refer to a plurality of cases arranged in a row side by side. It cannot, however, be ruled out that the term layer of cases may refer to a single case.

Preferably, the grouping and transfer unit 1 is adapted to receive a predefined number n of layers of cases S1, ..., Sn to stack them together.

As shown in Figure 1, the grouping and transfer unit 1 comprises at least one input area I of the cases to be grouped and at least one output area O of the grouped cases. Preferably, the output area O is arranged above the input area I.

The case packer machine 100 is also provided with a conveyor line 101 configured to transport a plurality of cases to be grouped to the input area I to deliver them to the grouping and transfer unit 1. It cannot, however, be ruled out that the insertion of the cases in the input area I can be done differently, such as e.g. manually by an operator.

Preferably, the conveyor line 101 is configured to transport the plurality of cases sequentially and spaced apart from each other by a predefined pitch.

Preferably, the conveyor line 101 is of the type of a conveyor belt adapted to move the cases. Preferably, the conveyor belt is inclined to make a chute for the cases.

The case packer machine 100 comprises a wrapping/packaging unit 102 arranged at the output area O. The wrapping/packaging unit 102 is configured to receive the group of cases and to insert it inside a box.

For this purpose, the wrapping/packaging unit 102 comprises at least one pusher element 103 adapted to push the group of cases from the output area O towards a cardboard box to insert them inside the latter.

The box is arranged at the output area O by means of a splaying assembly, not shown in the figures. Specifically, the splaying assembly is adapted to pick up a die-cut in a flattened configuration to set it to volume and arrange it at the output area O.

As can be seen in Figure 1, the case packer machine 100 comprises a supporting frame 104, preferably resting on or fixed to the floor, which is adapted to hold at least the grouping and transfer unit 1.

In detail, the supporting frame 104 comprises at least one supporting wall 105 where the case grouping and transfer unit 1 is at least partly mounted.

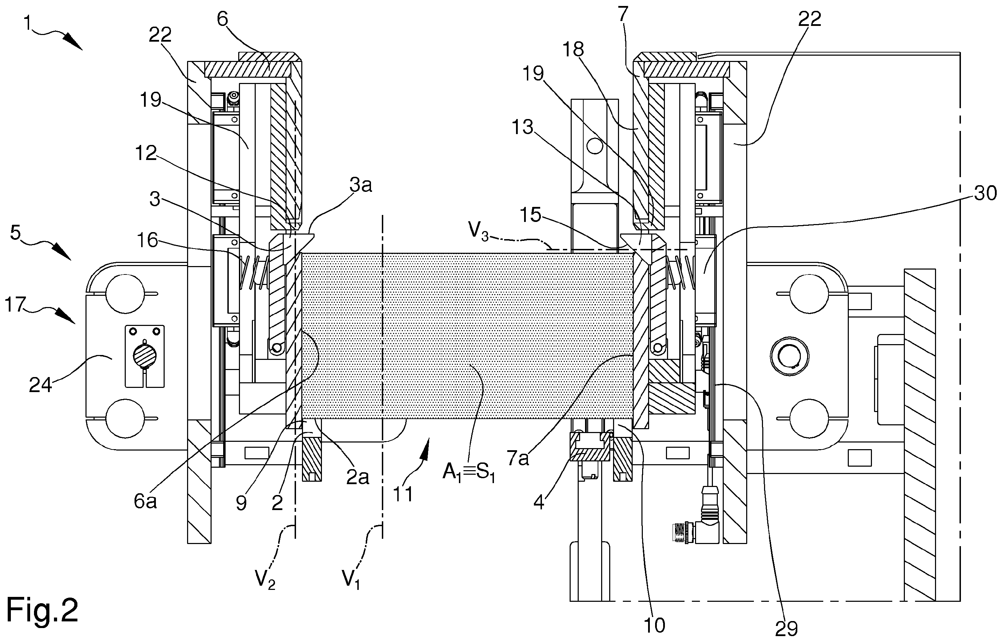

As visible from Figure 2, the case grouping and transfer unit comprises at least one holding element 2 arranged at the input area I and configured to receive at least a first case A1, intended to define a first layer of cases S1, and/or at least a second case A2, intended to define a second layer of cases S2.

Preferably, the holding element 2 is adapted to receive in a row a plurality of cases A1, A2 which, by arranging themselves along the holding element 2, make a layer of cases S1, S2. This layer of cases S1, S2 is intended to be stacked with further layers of cases S1, S2 received previously and/or subsequently.

The received cases are arranged along the holding element 2 by occupying it for substantially the entire length thereof. In actual facts, the length of the holding element 2 defines the number of receivable cases to make the layer of cases.

Preferably, the cases are received sequentially and arranged along the holding element 2 side by side.

Appropriately, the grouping and transfer unit 1 is provided with at least one supporting element 3 positioned between the holding element 2 and the output area O. The supporting element 3 is configured to:
- receive the first case A1 from a thrust element 4 which moves it away from the holding element 2 to free it so as to allow receiving at least a possible second case A2, which defines the second layer of cases S2, and/or
- receive the second case A2 from the thrust element 4 which moves it away from the holding element 2 to free it and allow receiving at least one possible additional case in order to stack in a pile or in a column the second case A2 with the first case A1 to make a stack of layers of cases S1, S2.

In actual facts, the supporting element 3 operates as a shelf where the cases A1, A2 received from the holding element 2 are arranged in order to free the latter to allow it to receive an additional layer of cases. The layers of cases arranged on the supporting element 3 can thus be stacked onto any other layers of cases received previously and/or subsequently from the holding element 2.

To sum up, the grouping and transfer unit 1 can be in two main situations depending on whether the supporting element 3 is free or occupied by one or more layers of cases stacked together.

In the event of the supporting element 3 being free, the thrust element 4 moves the first case A1 present on the holding element 2 towards the supporting element 3 to place it in support of the latter to make the first layer of cases S1, below which other layers of cases S2 received later will be placed.

In the event of, on the other hand, the supporting element 3 being occupied by at least the first layer of cases S1, the second layer of cases S2 received from the holding element 2 abuts against the first layer of cases S1 below, lifting it up and stacking onto the latter. This operation is repeated until a stack of cases provided with a predefined number n of layers is formed.

Once grouped, the cases are moved, preferably by means of the pushing element 4, towards the output area O to be delivered to the wrapping/packaging unit 102.

Advantageously, the grouping and transfer unit 1 is provided with adjustment means 5 configured to adjust the mutual position between the holding element 2 and the supporting element 3 depending on the height of the cases A1, A2 in order to speed up the grouping of the cases and the transfer thereof from the input area I to the output area O. Specifically, the adjustment means 5 are configured to adjust the distance between the holding element 2 and the supporting element 3 to a value substantially equal to or slightly higher than the height of the case to be received. This allows minimizing the movement of the thrust element to displace the case from the holding element 2 to the supporting element 3, thus speeding up the grouping operations.

As anticipated above, the grouping and transfer unit 1 comprises at least one thrust element 4 configured to move at least one case A1, A2 from the holding element 2 to the supporting element 3 along a direction of stacking V1. The supporting element 3 is arranged along such a direction of stacking V1 to receive the case A1, A2 from the thrust element 4.

In actual facts, the thrust element 4 is configured to move the layer of cases S1, S2 arranged on the holding element 2 towards the supporting element 3. It cannot, however, be ruled out that the grouping and transfer unit 1 may comprise different movement means of the cases from the holding element 2 to the supporting element 3.

As can be seen in detail later in the description, the adjustment means 5 are configured to adjust the distance between the holding element 2 and the supporting element 3 along a direction of adjustment V2 substantially parallel to the direction of stacking V1.

Appropriately, the supporting element 3 is arranged above the holding element 2 and the direction of stacking V1 has a substantially vertical orientation.

In the context of the following disclosure, the terms "vertical", "horizontal", "upper" and "lower" are meant to refer to the conditions under which the grouping and transfer unit 1 is normally used, i.e., those shown in Figures 1 and 2 wherein it is mounted on a case packer machine 100 resting on the ground.

In addition, the term "height" in reference to a case is meant to denote a dimension of a case arranged resting onto the holding element 2 that is substantially parallel to the direction of stacking V1.

As described in detail in the following description, the thrust element 4 moves the layer of cases S1, S2 so as it overtops the supporting element 3. Next, the thrust element 4 operates in conjunction with the supporting element 3 in order to arrange the layer of cases S1, S2 resting on the supporting element 3.

Once grouped together, the thrust element 4 is configured to move the group of cases from the supporting element 3 towards the output area O.

Preferably, the output area O is arranged above the supporting element 3. It cannot, however, be ruled out that the output area O can be arranged at the supporting element 3.

As can be observed from the figures, the thrust element 4 is movable along the direction of stacking V1 between a gripping position and a release position. In the gripping position, the thrust element 4 is arranged below the holding element 2 to abut against the layer of cases received and to push it along the direction of stacking V1. In the release position, on the other hand, the thrust element 4 is arranged at least partly above the supporting element 3 so that the layer of cases S1, S2 overtops the latter.

Appropriately, the thrust element 4 is operatively connected to the actuating means, not shown in the figures, adapted to move it along the direction of stacking V1.

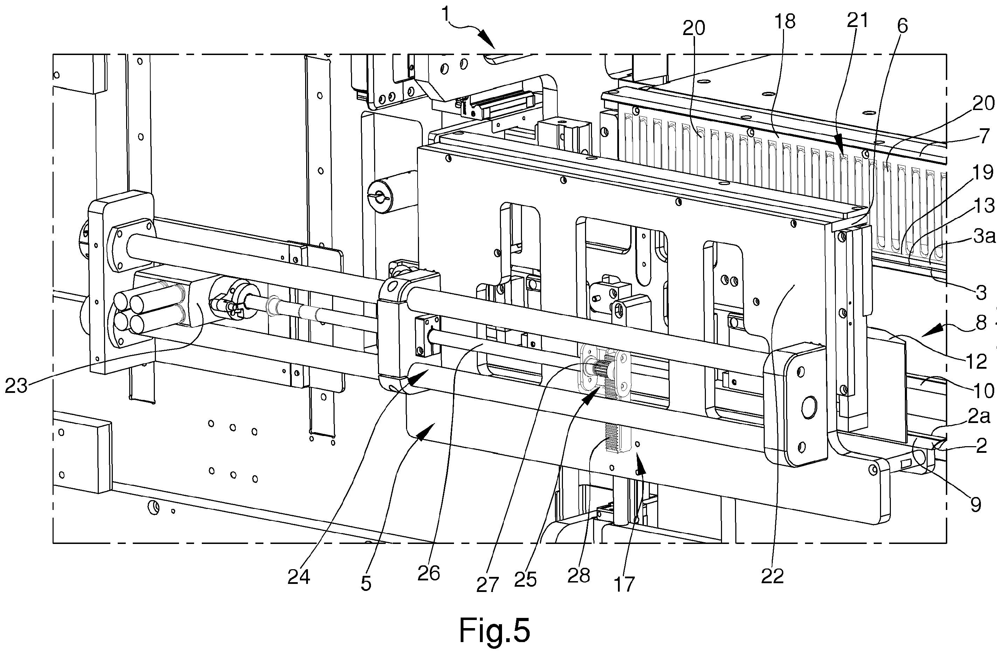

As can be seen from Figures 2 and 5, appropriately, the grouping and transfer unit 1 comprises at least a pair of sidewalls 6, 7 between which at least the holding element 2 is positioned in order to define an entrance tunnel 8 for the plurality of cases. Specifically, the entrance tunnel 8 is positioned at the input area I to receive the cases, e.g., from the conveyor line 101. In detail, the pair of sidewalls 6, 7 receives a row of cases sliding between them along a direction of insertion to arrange itself on the holding element 2 to make a layer of cases S1, S2.

Preferably, the direction of insertion is substantially transverse to the direction of stacking V1. In particular, the direction of insertion is substantially horizontal.

For this purpose, the sidewalls 6, 7 are arranged substantially parallel to the direction of stacking V1. In particular, the sidewalls 6, 7 are arranged substantially vertical.

In addition, the sidewalls 6, 7 are spaced apart from each other by a predefined distance substantially equal to, or slightly greater than, the width of the case. In this way, the cases can be inserted to size in the entrance tunnel 8 and are guided by the sidewalls 6, 7 along the direction of insertion.

The term "width" in reference to a case is meant to denote a dimension of a case, arranged on the holding element 2, which is substantially transverse to the direction of insertion and/or to the direction of stacking V1.

In the present case, each of the sidewalls 6, 7 comprises a guiding surface 6a, 7a. The guiding surfaces 6a, 7a face each other and are adapted to abut against the sides of the case to guide it along the entrance tunnel 8. In particular, the guiding surfaces 6a, 7a are arranged substantially parallel to the direction of insertion and to the direction of stacking V1.

As visible from Figure 2, the holding element 2 has at least one holding surface 2a where the cases A1, A2 received are arranged.

The holding surface 2a is arranged in a plane substantially transverse to the direction of stacking V1 and/or parallel to the direction of insertion, i.e., in a substantially horizontal plane.

Preferably, the holding element 2 has a predefined length which defines the number of cases that can be received sequentially to form a layer of cases S1, S2.

Conveniently, the holding element 2 comprises at least one pair of holding portions 9, 10 detached from each other to define an opening 11 for the passage of the thrust element 4.

In detail, in the gripping position, the thrust element 4 is arranged below the layer of cases S1, S2 arranged on the holding element 2. During its movement along the direction of stacking V1, the thrust element 4 passes through the opening 11 by abutting against the layer of cases S1, S2 to lift and move it towards the supporting element 3.

As can be seen from Figure 5, each holding portion 9, 10 has an elongated conformation and is mounted on one of the sidewalls 6, 7. In detail, each holding portion 9, 10 is arranged parallel to the direction of insertion of the cases to make, together with the sidewalls, a guide for the cases.

As can be seen from Figure 2, the supporting element 3 has at least one supporting surface 3a where the cases received are arranged resting thereon. The supporting surface 3a is arranged in a plane substantially transverse to the direction of stacking V1, that is, in a plane substantially horizontal. In practice, the supporting surface 3a is substantially parallel to the holding surface 2a.

Conveniently, the supporting element 3 comprises one pair of supporting portions 12, 13 detached from each other. Each supporting portion 12, 13 is mounted on one of the sidewalls 6, 7 and, preferably, has an elongated conformation. In detail, the supporting portions 12, 13 are arranged substantially parallel to each other and/or substantially horizontally. Furthermore, each supporting portion 12, 13 is arranged above one of the holding portions 9, 10.

Advantageously, the supporting portions 12, 13 are movable close to/away from each other to pass between a transit configuration, wherein they are moved away to allow the passage between them of the at least one case A1, A2 moved by the thrust element 4, and a supporting configuration, wherein they are moved closer to each other to prevent the case A1, A2 from passing in order to support and hold it.

In detail, in the transit configuration, the supporting portions 12, 13 are spaced apart from each other by a greater distance than the width of the case so as to allow for the passage thereof.

In the supporting configuration, on the other hand, the supporting portions 12, 13 are spaced apart from each other by a distance less than or substantially coincident with the width of the case so as to support and hold it.

In even more detail, in the supporting configuration, the supporting portions 12, 13 project from their respective sidewall 6, 7 in such a way that their projection on a transverse axis with respect to the direction of stacking V1 and/or with respect to the guiding surface 6a, 7a is greater than the projection of the supporting portions 12, 13 in the transit configuration.

For this purpose, at least one supporting portion 12, 13 is associated with the respective sidewall 6, 7 in a movable manner to move close to/away from the at least other supporting portion 12, 13 in order to pass between the transit configuration and the supporting configuration. In particular, the at least one supporting portion 12, 13 is movable along a direction of work V3 substantially transverse to the direction of stacking V1 and/or to the guiding surface 6a, 7a of the respective sidewall 6, 7.

Preferably, each supporting portion 12, 13 is associated with the respective sidewall 6, 7 in a movable manner to move close to/away from the other supporting portion 12, 13.

In actual facts, the supporting portions 12, 13 are made retractable in order to allow the cases moved by the thrust element 4 to overtop the supporting element 3. In addition, the supporting portions 12, 13 are extractable to operate as traps in order to lock and hold the cases moved by the thrust element 4.

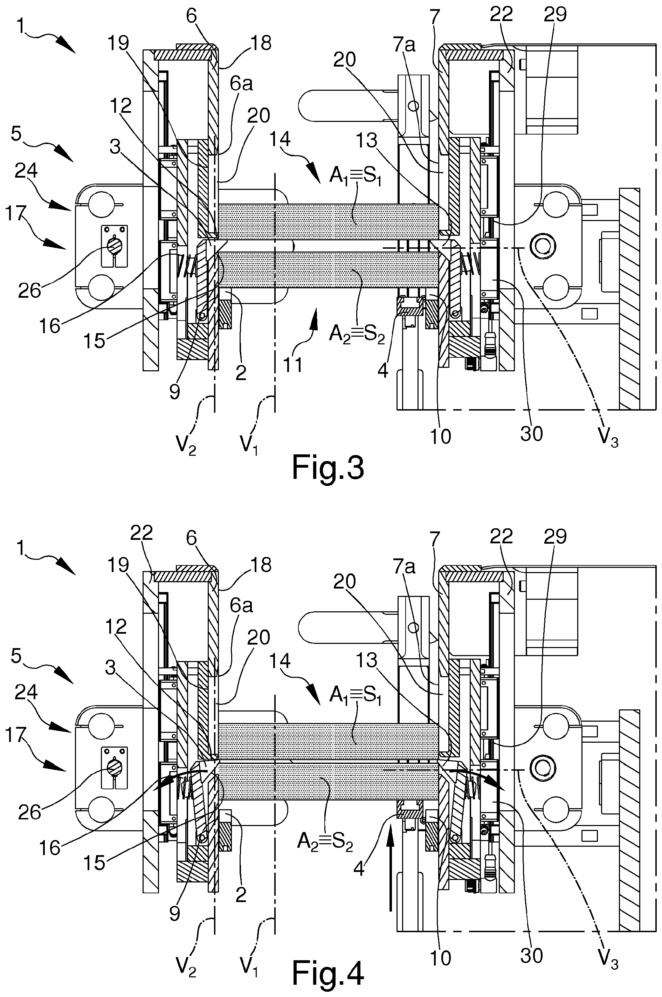

As can be seen from Figures 2 and 3, at least one of the supporting portions 12, 13 has at least one inviting surface 15 adapted to be abutted against by at least one case moved by the thrust element 4 to move the at least one of the supporting portions 12, 13 from the supporting configuration to the transit configuration.

In detail, the inviting surface 15 is arranged substantially inclined with respect to the direction of stacking V1 and/or to the direction of work V3. By means of such a conformation, the inviting surface 15, by abutting against the case moved by the supporting element 3, slides on the latter by moving the supporting portion 12, 13 from the abutment configuration to the transit configuration.

Preferably, at least one supporting portion 12, 13 is hinged to the respective sidewall 6, 7 around an axis of rotation substantially transverse to the direction of work V3 and/or to the direction of stacking V1. In particular, the axis of rotation is substantially horizontal. The inviting surface 15, by abutting against the case A1, A2 moved by the thrust element 4, rotates the supporting portion 12, 13 to move it from the abutment configuration to the transit configuration. It cannot, however, be ruled out that the supporting portion 12, 13 may be associated along a direction parallel to the direction of work V3 in a movable manner.

Preferably, each supporting portion 12, 13 has at least one inviting surface 15.

Preferably, the grouping and transfer unit 1 is provided with at least one elastic medium 16 located between a supporting portion 12, 13 and the respective sidewall 6, 7 and adapted to elastically push the at least one of the supporting portions 12, 13 from the transit configuration to the supporting configuration. In practice, the elastic medium 16 is adapted to elastically push the supporting portion 12, 13 to move it and/or to keep it in the abutment configuration. The inviting surface 15, in turn, by abutting against the case A1, A2 moved by the thrust element 4, moves the supporting portion 12, 13 from the supporting configuration to the transit configuration.

Preferably, each supporting portion 12, 13 has a respective elastic medium 16.

It cannot, however, be ruled out that the grouping and transfer unit 1 is without the elastic medium 16 and the movement of the supporting portions 12, 13 between the transit and the supporting configurations is carried out by means of the action of the case resting on the supporting element 3.

As anticipated above, at least one of the supporting portions 12, 13 comprises a supporting surface 3a adapted to receive the case to support it.

In particular, the supporting surface 3a has a substantially flat shape. Furthermore, in the supporting configuration, the supporting surface 3a lies on a plane substantially transverse to the direction of stacking V1, that is, on a substantially horizontal plane.

Preferably, each supporting portion 12, 13 has at least one supporting surface 3a.

Usefully, the supporting surface 3a and the inviting surface 15 are arranged distal and proximal to the holding element 2, respectively.

To summarize, after the holding element 2 has received a layer of cases S1, S2, the thrust element 4 moves the layer of cases S1, S2 received towards the supporting element 3. During such movement, the layer of cases abuts against the inviting surface 15 of the supporting portions 12, 13 moving the latter from the supporting configuration to the transit configuration to allow the layer of cases S1, S2 to overtop the supporting element 3. At this point, the supporting portions 12, 13 are moved to the supporting configuration again so that the layer of cases S1, S2 being moved can be received and held.

As anticipated above, at least one of either the holding element 2 or the supporting element 3 is movable close to/away from the other between the holding element 2 and the supporting element 3 along a direction of adjustment V2.

For this purpose, the adjustment means 5 comprise at least one movement assembly 17 adapted to move at least one of either the holding element 2 or the supporting element 3 along the direction of adjustment V2.

In this case, the direction of adjustment V2 is substantially parallel to the direction of stacking V1, that is, it is substantially vertical.

Preferably, the holding element 2 is substantially fixed and the supporting element 3 is movable close to/away from the holding element 2.

As shown in Figure 5, at least one of the pair of sidewalls 6, 7 has at least one fixed portion 18 and at least one movable portion 19 on which one of the supporting portions 12, 13 is mounted. In detail, the fixed portion 18 is locked together with the supporting frame 104 of the machine 100. The movable portion 19, on the other hand, is associated with the fixed portion 18 in a sliding manner with respect to the latter along the direction of adjustment V2.

Preferably, each sidewall of the pair of sidewalls 6, 7 has at least one fixed portion 18 and at least one movable portion 19 on which one of the supporting portions 12, 13 is mounted.

It cannot, however, be ruled out that in the event of the supporting element 3 being fixed and the holding element 2 is made movable close to/away from the supporting element 3, one of the holding portions 9, 10 is mounted on the movable portion 19 of the respective sidewall 6, 7.

As shown in Figure 2, each sidewall 6, 7 comprises a framework 22 adapted to support the fixed portion 18 in a fixed manner and the movable portion 19 in a movable manner. The framework 22, in turn, is mounted on the supporting frame 104 of the machine 100.

Preferably, each holding portion 9, 10 of the holding element 2 is mounted fixed onto the framework 22 of the respective sidewall 6, 7.

**In** the present case, the framework 22 comprises at least one rectilinear guide 29 where the movable portion 19 is mounted in a sliding manner. The rectilinear guide 29 is arranged substantially parallel to the direction of adjustment V2.

Preferably, the movable portion 19 is connected to the rectilinear guide 29 by interposition of at least one trolley 30 mounted on the rectilinear guide 29 in a sliding manner.

Appropriately, at least one of either the movable portion 19 or the fixed portion 18 has at least one tooth 20, and at least the other of either the movable portion 19 or the fixed portion 18 has at least one gap 21 adapted to accommodate the tooth 20. In particular, the tooth 20 is configured to slide along the gap 21 during the movement of the movable portion 19.

This expedient makes it possible to increase the extent of the sidewall surface when the movable portion 19 and the fixed portion 18 move away from each other.

In detail, the tooth 20 and the gap 21 mainly extend along a direction substantially parallel to the direction of adjustment V2.

Preferably, each of the movable portion 19 and of the fixed portion 18 has at least one tooth 20 and at least one gap 21, the latter being adapted to accommodate the tooth 20 of the other of either the movable portion 19 or the fixed portion 18.

According to one or more versions, at least one of either the movable portion 19 or the fixed portion 18 has a plurality of teeth 20 and at least the other of either the movable portion 19 or the fixed portion 18 has a plurality of gaps 21, each adapted to house at least one tooth 20.

Preferably, each of the movable portion 19 and of the fixed portion 18 has at least a plurality of teeth 20 and at least a plurality of gaps 21.

In the present case, the teeth 20 of at least one of either the movable portion 19 or the fixed portion 18 are placed side by side and spaced apart to make a gap 21 into which at least one tooth 20 of the other of either the movable portion 19 or the fixed portion 18 fits in a sliding manner.

Preferably, the fixed portion 18 is arranged above the movable portion 19.

Appropriately, the movement assembly 17 is provided with at least one actuator 23 operatively connected to at least one of either the holding element 2 or the supporting element 3 by means of at least one transmission system 24. The transmission system 24 is configured to transform the motion generated by the actuator 23 into a motion of the at least one of either the holding element 2 or the supporting element 3 along the direction of adjustment V2. In the present case, the transmission system 24 is operatively connected to the supporting element 3 to move it along the direction of adjustment V2 as it moves close to/away from the holding element 2.

Specifically, the actuator 23 is adapted to generate a rotary motion. In addition, the actuator 23 comprises at least one rotating shaft 26 adapted to rotate around its own longitudinal axis.

Preferably, the actuator 23 is a brushless type motor.

Appropriately, the rotating shaft 26 is arranged transversely to the direction of adjustment V2. In particular, the rotating shaft 26 is arranged substantially horizontally.

As can be seen from Figure 5, the transmission system 24 is provided with at least one gear 25 placed between the actuator 23 and the at least one of either the holding element 2 or the supporting element 3. Specifically, the gear 25 is configured to transform the motion generated by the actuator 23 into a linear motion of the at least one of either the holding element 2 or the supporting element 3 along the direction of adjustment V2. In this case, the gear 25 is placed between the actuator 23 and the supporting element 3.

For this purpose, the gear 25 comprises at least one rack 28 operatively connected to the at least one of either the holding element 2 or the supporting element 3 and at least one gear wheel 27 operatively connected to the rotating shaft 26 to set the latter in rotation. Usefully, the gear wheel 27 is configured to engage with the rack 28 to move, as a result of a rotation thereof, the at least one of either the holding element 2 or the supporting element 3 along the direction of adjustment V2.

In this case, the rack 28 is operatively connected to the supporting element 3. Specifically, the gear wheel 27 and the rack 28 are rigidly connected to the rotating shaft 26 and to the supporting element 3, respectively.

In the present case, the rack 28 is arranged substantially parallel to the direction of adjustment V2.

The gear wheel 27 is set in rotation by the actuator 23 so that a certain rotation thereof corresponds to a certain linear movement of the rack 28, and therefore of the supporting element 3, along the direction of adjustment V2.

Appropriately, the rack 28 is operatively connected to the movable portion 19 of at least one of the sidewalls 6, 7. In this way, the movement assembly 17 moves the movable portion 19 of the sidewall 6, 7 and with it the supporting portion 12, 13 connected thereto.

Appropriately, the movement assembly 17 comprises at least one pair of transmission systems 24 each adapted to connect the actuator 23 to one of the supporting portions 12, 13. In this manner, the actuator simultaneously moves each of the supporting portions 12, 13 in such a way as to make a substantially similar displacement in order to keep them aligned with each other.

It cannot, however, be ruled out that the movement assembly 17 comprises multiple actuators 23, each connected to one of the transmission systems 24.

It cannot also be ruled out that the movement assembly 17 comprises a single transmission system 24 that connects the actuator 23 to one of the supporting portions 12, 13 and the latter is rigidly connected to the other supporting portion 12, 13.

Preferably, the adjustment means 5 comprise a control device adapted to control the movement assembly 17 to adjust the distance between the holding element 2 and the supporting element 3 according to the size of the case to be received.

In the present case, the control device is operatively connected to the actuator 23 of the movement assembly 17 so as to control the operation thereof in order to adjust the rotation of the rotating shaft 26.

Preferably, the control device is of the type of an electronic control device such as e.g. a PLC, a microcontroller, a PC and/or the like.

Preferably, the adjustment means 5 comprise a detection device configured to detect the value of the height of the case.

The detection device is operatively connected to the control device to provide it with the value of the height of the case A. The control device can thus control the actuator 23 to adjust the distance between the supporting element 3 and the holding element 2 depending on the value provided by the detection device.

By such expediency, the grouping and transfer unit 1 can perform an automated adjustment of the distance between the supporting element 3 and the holding element 2, thus speeding up and simplifying the grouping operations.

Appropriately, the detection device comprises at least one of:
- a user interface configured to receive the value of the height of the case to be packed,
- a measuring device of the height of the case to be packed.

Preferably, the user interface is of the type of an electronic interfacing device, such as a PC, a tablet and/or the like.

Usefully, the measuring device comprises at least one sensor configured to detect the passage of the case in order to measure the height thereof using techniques known in themselves.

Preferably, the sensor is of the type of an electronic device such as, e.g., an infrared sensor, a proximity sensor, a distance sensor and/or the like.

A case packer machine 100 is configured to pack a plurality of cases and provided with at least one case grouping and transfer unit as described above.

As anticipated above, the case packer machine 100 is provided with at least one supporting frame 104 adapted to support at least the case grouping and transfer unit. In particular, the supporting frame 104 has at least one supporting wall 105.

As can be seen from Figure 1, the supporting wall 105 is provided with at least one pair of faces opposite each other. The pair of sidewalls 6, 7 is mounted on the supporting wall 105 at one of the two faces, while the actuator 23 is mounted at the other of the two faces.

Usefully, the supporting wall 105 has at least one hole suitable for the passage of at least part of the transmission system 24 to connect the actuator to the supporting element 3.

It has in practice been ascertained that the described invention achieves the intended objects, and in particular, the fact is emphasized that the case grouping and transfer unit, by varying the distance between the holding element and the supporting element, makes it possible to greatly speed up the procedures for grouping and transferring cases.

## Claims

1. Cases grouping and transfer unit (1) for case packer machines for the transfer of cases (a) from an input area (i) to an output area (o), comprising:
- at least one holding element (2) arranged at said input area (I) and configured to receive at least one first case (A1) intended to define a first layer of cases (S1), and/or at least one second case (A2) intended to define a second layer of cases (S2),
- at least one supporting element (3) positioned between said at least one holding element (2) and said output area (O),
- at least one thrust element (4) configured to move at least one of said cases (A1, A2) from said at least one holding element (2) to said at least one supporting element (3) along a direction of stacking (V1),
wherein said at least one supporting element (3) is configured to:
- receive said at least one first case (A1) from the at least one thrust element (4) which moves it away from said at least one holding element (2) to free it so as to allow receiving the at least one second case (A2), which defines said second layer of cases (S2), and/or
- receive said at least one second case (A2) from said at least one thrust element (4) which moves it away from said at least one holding element (2) to free it and allow receiving at least one additional case in order to stack said at least one second case (A2) onto said at least one first case (A1) to make a stack of layers of cases,
**characterized by** the fact that said cases grouping and transfer unit comprises adjustment means (5) configured to adjust the mutual position between said at least one holding element (2) and said at least one supporting element (3) depending on the height of the cases (A1, A2) in order to speed up their grouping and their transfer from said input area (I) to said output area (O).

2. Unit (1) according to claim 1, **characterized by** the fact that said adjustment means (5) comprise at least one movement assembly (17) which is adapted to move at least one of either said at least one holding element (2) or said at least one supporting element (3) along a direction of adjustment (v2), said direction of adjustment (v2) being substantially parallel to said direction of stacking (v1).

3. Unit (1) according to any one of the preceding claims, **characterized by** the fact that said at least one supporting element (3) is arranged above said at least one holding element (2) and that said direction of stacking (V1) has a substantially vertical orientation.

4. Unit (1) according to any one of the preceding claims, **characterized by** the fact that it comprises at least one pair of sidewalls (6, 7) between which said at least one holding element (2) is positioned in order to define an entrance tunnel (8) for said plurality of cases (A1, A2), said entrance tunnel (8) being positioned at said input area (I).

5. Unit (1) according to any one of the preceding claims, **characterized by** the fact that said at least one supporting element (3) comprises at least one pair of supporting portions (12, 13) movable close to/away from each other to pass between a transit configuration, wherein they are moved away to allow the passage between them of at least one case (A1, A2) moved by said at least one thrust element (4), and a supporting configuration, wherein they are moved closer to each other to prevent the at least one case (A1, A2) from passing in order to support it and hold it.

6. Unit (1) according to any one of the preceding claims when dependent on claim 2, **characterized by** the fact that said at least one movement assembly (17) is provided with at least one actuator (23) operatively connected to at least one of either said at least one holding element (2) or said at least one supporting element (3) by means of at least one transmission system (24), said at least one transmission system (24) being configured to transform the motion generated by said at least one actuator (23) into a motion of the at least one of either said at least one holding element (2) or said at least one supporting element (3) along said direction of adjustment (V2).

7. Unit (1) according to the preceding claim, **characterized by** the fact that said at least one transmission system (24) is provided with at least one gear (25) placed between said at least one actuator (23) and said at least one of either said at least one holding element (2) or said at least one supporting element (3), said at least one gear (25) being configured to transform the motion generated by said at least one actuator (23) into a linear motion of said at least one of either said at least one holding element (2) or said at least one supporting element (3) along said direction of adjustment (V2).

8. Unit (1) according to the preceding claim, **characterized by** the fact that said at least one actuator (23) comprises at least one rotating shaft (26) adapted to rotate around its own longitudinal axis, and by the fact that said at least one gear (25) comprises at least one rack (28) operatively connected to said at least one of either said at least one holding element (2) or said at least one supporting element (3), and at least one gear wheel (27) operatively connected to said at least one rotating shaft (26) to set the latter in rotation, said at least one gear wheel (27) being configured to engage with said at least one rack (28) to move, as a result of a rotation thereof, said at least one of either said at least one holding element (2) or said at least one supporting element (3) along said direction of adjustment (V2).

9. Unit (1) according to any one of the preceding claims when dependent on claims 4 and 5, **characterized by** the fact that said at least one holding element (2) is substantially fixed and said at least one supporting element (3) is movable close to/away from said at least one holding element (2), and by the fact that at least one of said at least one pair of sidewalls (6, 7) has at least one fixed portion (18) and at least one movable portion (19) on which one of said at least one pair of supporting portions (12, 13) is mounted, said at least one movable portion (19) being associated with said at least one fixed portion (18) in a sliding manner with respect to the latter along said direction of adjustment (V2).

10. Unit (1) according to the preceding claim, **characterized by** the fact that at least one of either said at least one movable portion (19) or said at least one fixed portion (18) has at least one tooth (20) and at least the other of either said at least one movable portion (19) or said at least one fixed portion (18) has at least one gap (21) adapted to accommodate said at least one tooth (20), said at least one tooth (20) being configured to slide along said at least one gap (21) during the movement of said at least one movable portion (19).

## Patentansprüche

1. Behältergruppierungs- und -transfereinheit (1) für Behälterverpackungsmaschinen zum Transferieren von Behältern (a) von einem Eingangsbereich (i) zu einem Ausgangsbereich (o), umfassend:
- mindestens ein Halteelement (2), das in dem Eingangsbereich (I) angeordnet und ausgebildet ist, mindestens einen ersten Behälter (A1), der zur Bildung einer ersten Behälterlage (S1) bestimmt ist, und/oder mindestens einen zweiten Behälter (A2), der zur Bildung einer zweiten Behälterlage (S2) bestimmt ist, aufzunehmen,
- mindestens ein Stützelement (3), das zwischen dem mindestens einen Halteelement (2) und dem Ausgabebereich (O) positioniert ist,
- mindestens ein Schubelement (4), das ausgebildet ist, mindestens einen der Behälter (A1, A2) entlang einer Stapelrichtung (V1) von dem mindestens einen Halteelement (2) zu dem mindestens einen Stützelement (3) zu bewegen,
wobei das mindestens eine Stützelement (3) ausgebildet ist:
- den mindestens einen ersten Behälter (A1) von dem mindestens einen Schubelement (4) aufzunehmen, das ihn von dem mindestens einen Halteelement (2) wegbewegt, um es freizugeben, damit die Aufnahme des mindestens einen zweiten Behälters (A2), der die zweite Behälterlage (S2) bildet, ermöglicht ist, und/oder
- den mindestens einen zweiten Behälter (A2) von dem mindestens einen Schubelement (4) aufzunehmen, das ihn von dem mindestens einen Halteelement (2) wegbewegt, um es freizugeben und die Aufnahme mindestens eines weiteren Behälters zu ermöglichen, um den mindestens einen zweiten Behälter (A2) auf den mindestens einen ersten Behälter (A1) zu stapeln, um einen Stapel von Behälterlagen zu bilden,
**dadurch gekennzeichnet, dass** die Behältergruppierungs- und -transfereinheit Einstellmittel (5) umfasst, die ausgebildet sind, die Relativposition zwischen dem mindestens einen Halteelement (2) und dem mindestens einen Stützelement (3) in Abhängigkeit von der Höhe der Behälter (A1, A2) einzustellen, um deren Gruppierung und deren Transfer von dem Eingangsbereich (I) zu dem Ausgangsbereich (O) zu beschleunigen.

2. Einheit (1) nach Anspruch 1, **dadurch gekennzeichnet, dass** die Einstellmittel (5) mindestens eine Bewegungsbaugruppe (17) umfasst, die ausgebildet ist, mindestens eines des mindestens einen Halteelements (2) oder des mindestens einen Stützelements (3) entlang einer Einstellrichtung (v2) zu bewegen, wobei die Einstellrichtung (v2) im Wesentlichen parallel zu der Stapelrichtung (v1) verläuft.

3. Einheit (1) nach einem der vorhergehenden Ansprüche, **dadurch gekennzeichnet, dass** das mindestens eine Stützelement (3) über dem mindestens einen Halteelement (2) angeordnet ist und dass die Stapelrichtung (V1) eine im Wesentlichen vertikale Ausrichtung hat.

4. Einheit (1) nach einem der vorhergehenden Ansprüche, **dadurch gekennzeichnet, dass** sie mindestens ein Paar Seitenwände (6, 7) umfasst, zwischen denen das mindestens eine Halteelement (2) positioniert ist, um einen Eingangstunnel (8) für die mehreren Behälter (A1, A2) zu definieren, wobei der Eingangstunnel (8) in dem Eingangsbereich (I) positioniert ist.

5. Einheit (1) nach einem der vorhergehenden Ansprüche, **dadurch gekennzeichnet, dass** das mindestens eine Stützelement (3) mindestens ein Paar Stützabschnitte (12, 13) umfasst, die aufeinander zu/ voneinander weg bewegbar sind, um zwischen einer Transitkonfiguration, in der sie voneinander weg bewegt sind, um den Durchgang von mindestens einem durch das mindestens eine Schubelement (4) bewegten Behälter (A1, A2) zwischen ihnen zu ermöglichen, und einer Stützkonfiguration, in der sie aufeinander zubewegt sind, um den Durchgang des mindestens einen Behälters (A1, A2) zu verhindern, um ihn zu stützen und zu halten.

6. Einheit (1) nach einem der vorhergehenden Ansprüche, wenn von Anspruch 2 abhängig, **dadurch gekennzeichnet, dass** die mindestens eine Bewegungsbaugruppe (17) mit mindestens einem Aktuator (23) versehen ist, der mit mindestens einem dem mindestens einen Halteelement (2) oder dem mindestens einen Stützelement (3) mittels mindestens eines Übertragungssystems (24) wirkverbunden ist, wobei das mindestens eine Übertragungssystem (24) ausgebildet ist, die von dem mindestens einen Aktuator (23) erzeugte Bewegung in eine Bewegung von mindestens einem des mindestens einen Halteelements (2) oder des mindestens einen Stützelements (3) entlang der Einstellrichtung (V2) umzuwandeln.

7. Einheit (1) nach dem vorhergehenden Anspruch, **dadurch gekennzeichnet, dass** das mindestens eine Übertragungssystem (24) mit mindestens einem Getriebe (25) versehen ist, das zwischen dem mindestens einen Aktuator (23) und dem mindestens einen entweder dem mindestens einen Halteelement (2) oder dem mindestens einen Stützelement (3) angeordnet ist, wobei das mindestens eine Getriebe (25) ausgebildet ist, die von dem mindestens einen Aktuator (23) erzeugte Bewegung in eine lineare Bewegung von dem mindestens einen des mindestens einen Halteelements (2) oder des mindestens einen Stützelements (3) entlang der Einstellrichtung (V2) umzuwandeln.

8. Einheit (1) nach dem vorhergehenden Anspruch, **dadurch gekennzeichnet, dass** der mindestens eine Aktuator (23) mindestens eine Drehwelle (26) umfasst, die ausgebildet ist, um ihre eigene Längsachse zu drehen, und dass das mindestens eine Getriebe (25) mindestens eine Zahnstange (28), die mit dem mindestens einen entweder dem mindestens einen Halteelement (2) oder dem mindestens einen Stützelement (3) wirkverbunden ist, und mindestens ein Zahnrad (27) umfasst, das mit der mindestens einen Drehwelle (26) wirkverbunden ist, um diese in Drehung zu versetzen, wobei das mindestens eine Zahnrad (27) ausgebildet ist, mit der mindestens einen Zahnstange (28) in Eingriff zu treten, um infolge seiner Drehung des mindestens einen des mindestens einen Halteelements (2) oder des mindestens einen Stützelements (3) entlang der Einstellrichtung (V2) zu bewegen.

9. Einheit (1) nach einem der vorhergehenden Ansprüche, wenn von den Ansprüchen 4 und 5 abhängig, **dadurch gekennzeichnet, dass** das mindestens eine Halteelement (2) im Wesentlichen feststehend ist und das mindestens eine Stützelement (3) auf das mindestens eine Halteelement (2) zu/ von diesem weg bewegbar ist, und dass mindestens eines des mindestens einen Paares von Seitenwänden (6, 7) mindestens einen feststehenden Abschnitt (18) und mindestens einen beweglichen Abschnitt (19) aufweist, an dem einer der mindestens einen Paare von Stützabschnitten (12, 13) angebracht ist, wobei der mindestens eine bewegliche Abschnitt (19) mit dem mindestens einen festen Abschnitt (18) in einer gleitenden Weise in Bezug auf diesen entlang der Einstellrichtung (V2) verbunden ist.

10. Einheit (1) nach dem vorhergehenden Anspruch, **dadurch gekennzeichnet, dass** mindestens einer des mindestens einen beweglichen Abschnitts (19) oder des mindestens einen festen Abschnitts (18) mindestens einen Zahn (20) aufweist und zumindest der andere des mindestens einen beweglichen Abschnitts (19) oder des mindestens einen festen Abschnitts (18) mindestens einen Spalt (21) aufweist, der zur Aufnahme des mindestens einen Zahns (20) ausgelegt ist, wobei der mindestens eine Zahn (20) ausgebildet ist, während der Bewegung des mindestens einen beweglichen Abschnitts (19) entlang des mindestens einen Spaltes (21) zu gleiten.

## Revendications

1. - Unité de regroupement et de transfert de boîtiers (1) pour des machines d'encaissage de boîtiers pour le transfert de boîtiers (a) d'une zone d'entrée (i) à une zone de sortie (o), comprenant :
- au moins un élément de maintien (2) disposé à ladite zone d'entrée (I) et configuré pour recevoir au moins un premier boîtier (A1) destiné à définir une première couche de boîtiers (S1), et/ou au moins un second boîtier (A2) destiné à définir une seconde couche de boîtiers (S2),
- au moins un élément de support (3) positionné entre ledit au moins un élément de maintien (2) et ladite zone de sortie (O),
- au moins un élément de poussée (4) configuré pour déplacer au moins l'un desdits boîtiers (A1, A2) dudit au moins un élément de maintien (2) audit au moins un élément de support (3) le long d'une direction d'empilement (V1),
dans laquelle ledit au moins un élément de support (3) est configuré pour :
- recevoir ledit au moins un premier boîtier (A1) depuis l'au moins un élément de poussée (4) qui l'éloigne dudit au moins un élément de maintien (2) pour le libérer afin de permettre la réception de l'au moins un second boîtier (A2), qui définit ladite seconde couche de boîtiers (S2), et/ou
- recevoir ledit au moins un second boîtier (A2) depuis ledit au moins un élément de poussée (4) qui l'éloigne dudit au moins un élément de maintien (2) pour le libérer et permettre la réception d'au moins un boîtier supplémentaire afin d'empiler ledit au moins un second boîtier (A2) sur ledit au moins un premier boîtier (A1) pour réaliser un empilement de couches de boîtiers,
**caractérisée par le fait que** ladite unité de regroupement et de transfert de boîtiers comprend des moyens de réglage (5) configurés pour ajuster la position mutuelle entre ledit au moins un élément de maintien (2) et ledit au moins un élément de support (3) en fonction de la hauteur des boîtiers (A1, A2) afin d'accélérer leur regroupement et leur transfert de ladite zone d'entrée (I) à ladite zone de sortie (O).

2. - Unité (1) selon la revendication 1, **caractérisée par le fait que** lesdits moyens de réglage (5) comprennent au moins un ensemble de déplacement (17) qui est apte à déplacer au moins l'un soit dudit au moins un élément de maintien (2) soit dudit au moins un élément de support (3) le long d'une direction de réglage (v2), ladite direction de réglage (v2) étant sensiblement parallèle à ladite direction d'empilement (v1).

3. - Unité (1) selon l'une quelconque des revendications précédentes, **caractérisée par le fait que** ledit au moins un élément de support (3) est disposé au-dessus dudit au moins un élément de maintien (2) et que ladite direction d'empilement (V1) a une orientation sensiblement verticale.

4. - Unité (1) selon l'une quelconque des revendications précédentes, **caractérisée par le fait qu'**elle comprend au moins une paire de parois latérales (6, 7) entre lesquelles ledit au moins un élément de maintien (2) est positionné afin de définir un tunnel d'entrée (8) pour ladite pluralité de boîtiers (A1, A2), ledit tunnel d'entrée (8) étant positionné à ladite zone d'entrée (I).

5. - Unité (1) selon l'une quelconque des revendications précédentes, **caractérisée par le fait que** ledit au moins un élément de support (3) comprend au moins une paire de parties de support (12, 13) déplaçables pour se rapprocher/s'éloigner l'une de l'autre pour passer entre une configuration de transit, dans laquelle elles sont éloignées pour permettre le passage entre elles d'au moins un boîtier (A1, A2) déplacé par ledit au moins un élément de poussée (4), et une configuration de support, dans laquelle elles sont rapprochées l'une de l'autre pour empêcher le passage de l'au moins un boîtier (A1, A2) afin de le soutenir et de le maintenir.

6. - Unité (1) selon l'une quelconque des revendications précédentes en dépendance de la revendication 2, **caractérisée par le fait que** ledit au moins un ensemble de déplacement (17) comporte au moins un actionneur (23) relié de manière fonctionnelle à au moins un soit dudit au moins un élément de maintien (2) soit dudit au moins un élément de support (3) au moyen d'au moins un système de transmission (24), ledit au moins un système de transmission (24) étant configuré pour transformer le mouvement généré par ledit au moins un actionneur (23) en un mouvement de l'au moins un soit dudit au moins un élément de maintien (2) soit dudit au moins un élément de support (3) le long de ladite direction de réglage (V2).

7. - Unité (1) selon la revendication précédente, **caractérisée par le fait que** ledit au moins un système de transmission (24) comporte au moins un engrenage (25) placé entre ledit au moins un actionneur (23) et ledit au moins un soit dudit au moins un élément de maintien (2) soit dudit au moins un élément de support (3), ledit au moins un engrenage (25) étant configuré pour transformer le mouvement généré par ledit au moins un actionneur (23) en un mouvement linéaire dudit au moins un soit dudit au moins élément de maintien (2) soit dudit au moins un élément de support (3) le long de ladite direction de réglage (V2).

8. - Unité (1) selon la revendication précédente, **caractérisée par le fait que** ledit au moins un actionneur (23) comprend au moins un arbre rotatif (26) apte à tourner autour de son propre axe longitudinal, et **par le fait que** ledit au moins un engrenage (25) comprend au moins une crémaillère (28) reliée de manière fonctionnelle audit au moins un soit dudit au moins un élément de maintien (2) soit dudit au moins un élément de support (3), et au moins une roue dentée (27) reliée de manière fonctionnelle audit au moins un arbre rotatif (26) pour mettre ce dernier en rotation, ladite au moins une roue dentée (27) étant configurée pour s'engager avec ladite au moins une crémaillère (28) pour déplacer, comme suite à une rotation de celle-ci, ledit au moins un soit dudit au moins un élément de maintien (2) soit dudit au moins un élément de support (3) le long de ladite direction de réglage (V2).

9. - Unité (1) selon l'une quelconque des revendications précédentes en dépendance des revendications 4 et 5, **caractérisée par le fait que** ledit au moins un élément de maintien (2) est sensiblement fixe et que ledit au moins un élément de support (3) est déplaçable pour se rapprocher/s'éloigner dudit au moins un élément de maintien (2), et **par le fait qu'**au moins l'une de ladite au moins une paire de parois latérales (6, 7) a au moins une partie fixe (18) et au moins une partie mobile (19) sur laquelle est montée l'une de ladite au moins une paire de parties de support (12, 13), ladite au moins une partie mobile (19) étant associée à ladite au moins une partie fixe (18) de manière coulissante par rapport à cette dernière le long de ladite direction de réglage (V2).

10. - Unité (1) selon la revendication précédente, **caractérisée par le fait qu'**au moins l'une soit de ladite au moins une partie mobile (19) soit de ladite au moins une partie fixe (18) a au moins une dent (20) et qu'au moins l'autre soit de ladite au moins une partie mobile (19) soit de ladite au moins une partie fixe (18) a au moins un espacement (21) apte à recevoir ladite au moins une dent (20), ladite au moins une dent (20) étant configurée pour coulisser le long dudit au moins un espacement (21) pendant le déplacement de ladite au moins une partie mobile (19).
